# EUROPEAN PATENT APPLICATION

(11) **EP 2 570 098 A2**
(43) Date of publication of application: **20.03.2013**
(21) Application number: 11780848.5
(22) Date of filing: 13.05.2011
(51) Int. Cl.: A61C 8/00, A61C 13/263

(54) **IMPLANT DETECTOR COVER SCREW**

(30) Priority: 13.05.2010 KR 20100045099
(71) Applicant: Innobiosurg, Daejeon 305-500 (KR)
(72) Inventor: WANG, Je-Won, Daejeon 305-500 (KR)
(74) Representative: Lord, Michael
(86) International application number: PCT/KR2011/003567
(87) International publication number: WO 2011/142631

(57) **Abstract**

An implant detector cover screw includes a head; an upper recess having a recess provided in the center of an upper part of the head; a lower part having a screw thread provided on the surface thereof below the head; and a projection provided in the upper recess.

## Description

### TECHNICAL FIELD

The present invention relates to an implant for a tooth, and more particularly, to an implant detector cover screw, which is inserted in an upper groove of a dental implant fixture for confirming the position of the implant fixture planted beneath gums reproduced at the upper part of the implant fixture when an operator performs an operation of incising the gums after the implant fixture is planted into snag and then left for a predetermined period of time, in an implant operation.

### BACKGROUND ART

In general, implant means a substitute for recovering a lost or damaged human tissue when the human tissue is lost or damaged, but means transplantation of an artificial tooth in the dental surgery. The implant is used in recovering function of teeth by planting a dental root made of titanium etc. which does not raise rejection symptoms in the human body onto snag and by fixing an artificial tooth onto the dental root so as to be able to substitute a dental root of lost tooth.

In case of a general prosthesis or denture, surrounding teeth and bones are damaged with a lapse of time. However, the implant does not damage surrounding tooth tissues and causes no decay in the tooth while having a function and an appearance similar to those of a natural tooth, so that it can be semi-permanently used.

A dental implant fixture is implanted by passing through a hard compact bone having a high bone density and penetrating cancellous bone having a low bone density.

After a certain period of time elapses so that the implanted dental implant fixture corresponds to the original snag, an artificial tooth is planted at an upper part of the dental implant fixture.

However, since gums are reproduced during a certain period of time after the dental implant fixture is planted, the gums cover up to the upper part of the dental implant fixture. Therefore, when an operation of the artificial tooth, the gums reproduced at the upper part of the dental implant fixture should be incised. In this case, an operation recognizes an approximate position to be incised, but does not recognize the exact position to be incised. For this reason, the operation should incise the gums several times when the gums reproduced at the upper part of the dental implant fixture is removed. To solve such a problem, many studies for implant structures have been conducted.

For example, in Korean Registered Patent Gazette No. 10-0817209, there is disclosed a dental implant fixture configured to include a planting part having a screw thread formed on the outer surface thereof so as to be planted onto snag; a planar part formed on the top surface of the planting part so as to be parallel with the surface of the snag; a screw hole formed to penetrate from the surface to the inside of the planar part; and a cover screw inserted into the screw hole, so as to be parallel with the surface of the snag and the planar part.

In Korean Registered Patent Gazette No. 10-67787, there is disclosed a healing abutment including a main body part having a slope section inclined as at least a part of a gum contact part contacting gums extends from the bottom end to the top end when being coupled to a fixture planted onto snag; and a coupling part coupled to the main body part so as to allow the main body part to be attachably/detachably coupled to the fixture.

In Korean Registered Utility Model Gazette No. 20-25432, there is disclosed a fixture for an artificial tooth, which has a screw part formed on the outer surface thereof so as to be planted onto a patient's jawbone and has an artificial tooth coupled to the screw part at the upper part thereof, in which a hexagonal head is provided at the top end of the fixture, a screw hole for fastening an implant fixing screw thereinto along the direction of a center axis, and a guide hole having a diameter greater than the minimum diameter of the screw hole is coaxially formed with the screw hole at the upper part of the screw hole.

In Korean Patent Publication Gazette No. 1020090110136, there is disclosed an implant structure having a healing abutment coupled to a fixture implanted into snag, in which a healing cover is coupled to the fixture by being inserted into the healing abutment, and an end portion of the healing cover is planted to a certain depth from the surface of gums so as to fill in the gap between the healing abutment and the gums.

### DETAILED DESCRIPTION

### Technical Problems

In case of the conventional implant fixture, gums are reproduced to cover up to the upper part of the implant fixture while the implant fixture is planted into snag and then left for a certain period of time. Accordingly, to allow an artificial tooth to the upper part of the implant fixture, an operator should incise the gums reproduced at the upper part of the implant fixture. In this case, the operator recognizes an approximate position to be incised, but does not recognize the exact position to be incised. It is thus an object of the present invention to provide an implant detector cover screw which can solving a problem in that when removing gums reproduced at the upper part of an implant fixture, an operator should form a flap (state in which the gums are incised and spread) by excessively incising the gums.

### Technical Solutions

To solve the objective, the present invention provides an implant detector cover screw, which is inserted into an upper groove of an implant fixture, and has a sharp projection provided at the upper part of the implant fixture. Thus, in an implant operation, the implant fixture is planted into snag and then left for a predetermined period of time. Subsequently, to allow an artificial tooth to be fixed into the upper groove of the implant fixture, before incising the gums reproduced at the upper part of the implant fixture, an operator exactly confirms the position of the implant fixture by pressing and examining gums at an operation part. Accordingly, the operator can perform an operation for removing the gums at a time.

### Advantageous Effects

Based on the above structure, in the present invention, it is possible to prevent an inconvenience in that when removing gums reproduced at the upper part of an implant fixture, an operator should form a flap by excessively incising the gums. Further, it is possible to reduce patient's pain and operator's operation time, and to allow gums to be rapidly reproduced by performing an exact operation for removing the gums at a time.

### Brief Description of Drawings

FIG. 1 is an overall view of an implant detector cover screw of the present invention;

A perspective view (1A), a plan view (1 B) and a side sectional view (1C);

FIG. 2 is a view showing a state in which an implant fixture is planted;

FIG. 3 is a view showing a state in which the implant detector cover screw of the present invention is fixed;

FIG. 4 is a view showing a state in which an abutment is fixed to the implant fixture at the upper part of the implant fixture;

FIG. 5 is a view shown an operation state of an artificial tooth;

FIG. 6 is a view showing a state in which implant detector cover screws of the present invention are fixed; and

FIGS. 7 to 9 show other examples of the implant detector cover screw of the present invention.

### Best modes for practicing Invention

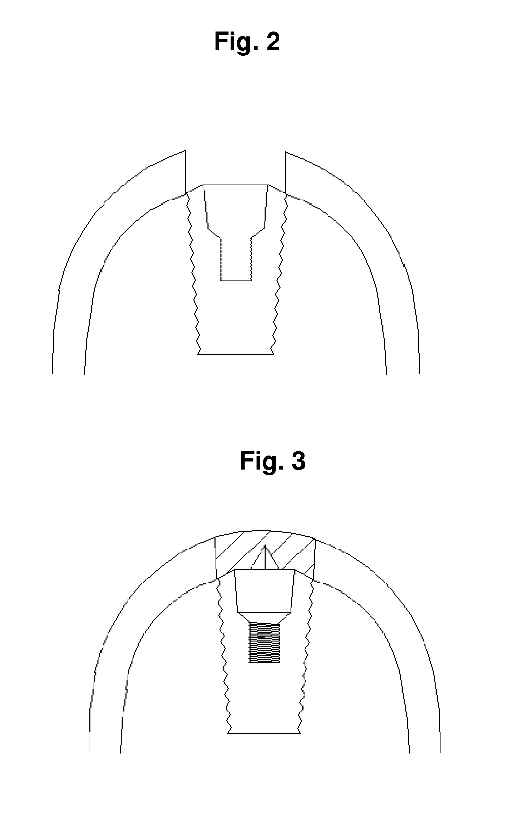

An implant operation method used in the present invention is the same as an ordinary implant operation method, but has a structural difference from the ordinary implant operation method. In the operation method, an implant fixture is planted into snag (See FIG. 2), an implant detector cover screw of the present invention is then screw-coupled into an upper groove of the implant fixture (See FIG. 3). Subsequently, the screw-coupled implant detector cover screw is left for a predetermined period of time (integration of the implant fixture with the snag). To allow an artificial tooth to be fixed on the upper part of the implant fixture, before incising the gums reproduced at the upper part of the implant fixture, an operator presses and examines gums at an operation part. In the examination, the operator exactly confirms the position of a sharp project of the implant detector cover screw and then operates the gums reproduced at the upper part of the implant fixture at a time, so as to remove the implant detector cover screw.

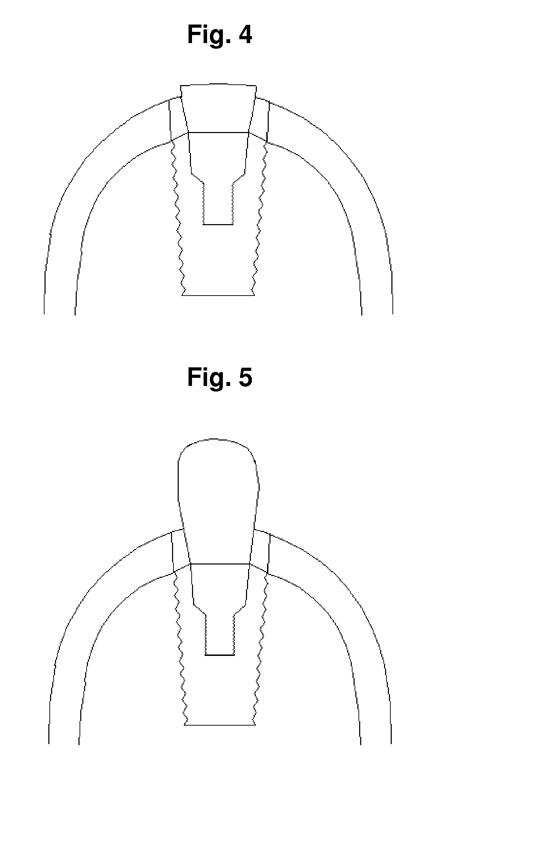

Subsequently, the operator inserts an abutment into the upper groove of the implant fixture (See FIG. 4) and then operates the artificial tooth at the upper part of the inserted abutment (See FIG. 5). Accordingly, it is possible to reduce patient's pain and operator's operation time, thereby simply performing the implant operation method.

### Modes for practicing Invention

To achieve the object described above, the present invention provides an implant detector cover screw configured to include a head 1; an upper recess 3 having a recess provided in the center of an upper part of the head 1; a lower part 2 having a screw thread provided on the surface thereof below the head 1; and a sharp projection 10, 10-1 or 10-2 provided at the upper pat of the head 1.

In the present invention, the implant detector cover screw is inserted into an upper groove of an implant fixture, and has a sharp projection provided at the upper part of the implant fixture. Thus, in an implant operation, the implant fixture is planted into snag and then left for a predetermined period of time. Subsequently, to allow an artificial tooth to be fixed into the upper groove of the implant fixture, before incising the gums reproduced at the upper part of the implant fixture, an operator exactly confirms the position of the implant fixture by pressing and examining gums at an operation part. Accordingly, the operator can perform an operation for removing the gums at a time.

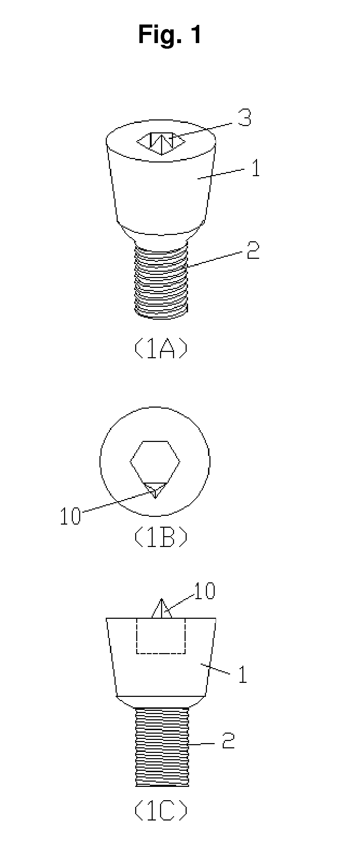

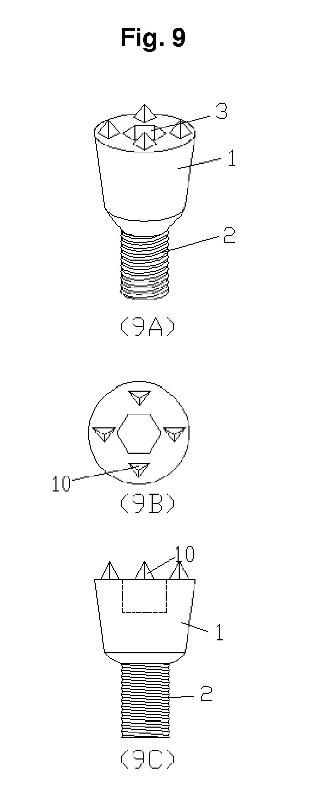

The sharp projection of the present invention may be a conic projection 10 provided at one side of the upper center of the head 1 as shown in FIGS. 1 to 6, or a plurality of sharp conic projections are provided around the upper center of the head 1 as shown in FIG. 9.

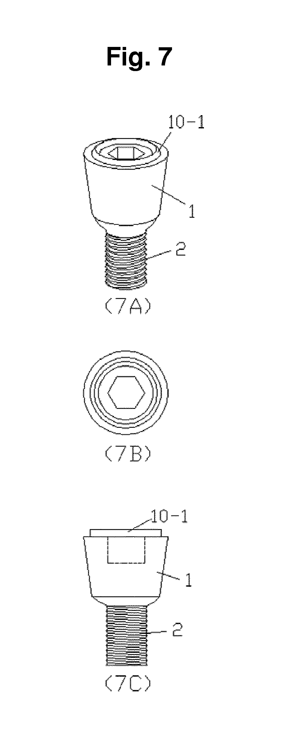

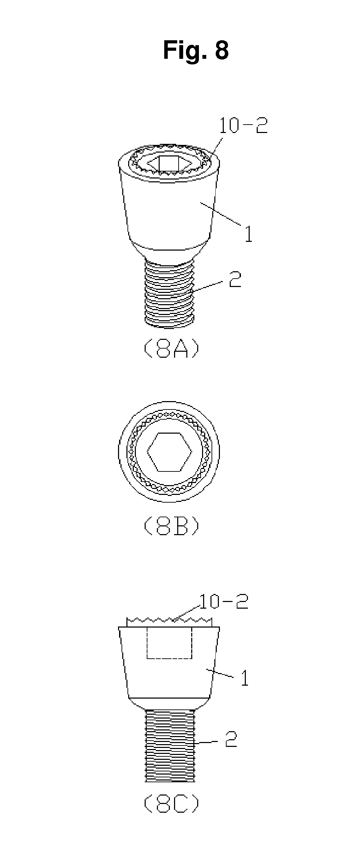

Alternatively, the projection of the present invention may be an annular (circular) projection 10-1 formed around a circumference of the upper groove 3 of the head 1 as shown in FIG. 7, or

may be a projection 10-2 obtained by forming the uppermost end of the annular (circular) projection in the shape of saw teeth as shown in FIG. 8. Thus, the implant detector cover screw can use any one selected from the projections 10, 10-1 and 10-2.

Hereinafter, an exemplary embodiment of the present invention will be described in detail.

Embodiment

An implant operation method used in this embodiment is the same as an ordinary implant operation method, but has a structural difference from the ordinary implant operation method. In the operation method, an implant fixture is planted into snag (See FIG. 2), an implant detector cover screw of the present invention is then screw-coupled into an upper groove of the implant fixture (See FIG. 3). Subsequently, the screw-coupled implant detector cover screw is left for a predetermined period of time (integration of the implant fixture with the snag). To allow an artificial tooth to be fixed on the upper part of the implant fixture, before incising the gums reproduced at the upper part of the implant fixture, an operator presses and examines gums at an operation part. In the examination, the operator exactly confirms the position of a sharp project of the implant detector cover screw

and then operates the gums reproduced at the upper part of the implant fixture at a time, so as to remove the implant detector cover screw. Subsequently, the operator inserts an abutment into the upper groove of the implant fixture (See FIG. 4) and then operates the artificial tooth at the upper part of the inserted abutment (See FIG. 5). Accordingly, it is possible to reduce patient's pain and operator's operation time, thereby simply performing the implant operation method.

Hereinafter, exemplary embodiments of the present invention will be described in detail with reference to the accompanying drawings.

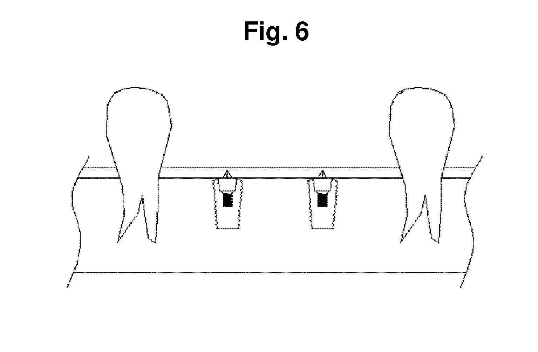

FIG. 1 is an overall view of an implant detector cover screw of the present invention, which shows a perspective view (1A), a plan view (1 B) and a side sectional view (1C). FIG. 2 is a view showing a state in which an implant fixture is planted. FIG. 3 is a view showing a state in which the implant detector cover screw of the present invention is fixed. FIG. 4 is a view showing a state in which an abutment is fixed to the implant fixture at the upper part of the implant fixture. FIG. 5 is a view shown an operation state of an artificial tooth. FIG. 6 is a view showing a state in which implant detector cover screws of the present invention are fixed. FIGS. 7 to 9 show other examples of the implant detector cover screw of the present invention. The head 1, the upper groove 3, the lower part 2 and the projections (10, 10-1 and 10-2) are shown in these figures.

The structure of the implant detector cover screw will be described. As shown in FIGS. 1 to 9, the implant detector cover screw of the present invention has a structure configured with a head 1, an upper recess 3 having a recess provided in the center of an upper part of the head 1, a lower part 2 having a screw thread provided on the surface thereof below the head 1, and a sharp projection 10, 10-1 or 10-2 provided at the upper pat of the head 1.

The projection 10 may be provided in a sharp conic shape at one side of the upper center of the head 1 as shown in FIGS. 1 to 6, or a plurality of sharp conic projections are provided around the upper center of the head 1 as shown in FIG. 9.

Alternatively, the projection may be an annular (circular) projection 10-1 formed around a circumference of the upper groove 3 of the head 1 as shown in FIG. 7, or may be a projection 10-2 obtained by forming the uppermost end of the annular (circular) projection in the shape of saw teeth as shown in FIG. 8.

Thus, the implant detector cover screw can use any one selected from the projections 10, 10-1 and 10-2.

### Industrial applicability

The present invention relates to an implant detector cover screw which is inserted in an upper groove of a dental implant fixture for confirming the position of the implant fixture planted beneath gums reproduced at the upper part of the implant fixture when an operator performs an operation of incising the gums after the implant fixture is planted into snag and then left for a predetermined period of time, in an implant operation.

## Claims

1. An implant detector cover screw, comprising:
a head;
an upper recess having a recess provided in the center of an upper part of the head;
a lower part having a screw thread provided on the surface thereof below the head; and
a projection provided in the upper recess.

2. The implant detector cover screw according to claim 1, wherein the projection is a sharp conic projection, and one or more conic projections are provided at the upper part of the head.

3. The implant detector cover screw according to claim 1, wherein the projection is an annular (circular) projection formed around a circumference of the upper groove of the head.

4. The implant detector cover screw according to claim 1, wherein the projection is a projection obtained by forming the uppermost end of the annular (circular) projection in the shape of saw teeth.
